# EUROPÄISCHE PATENTANMELDUNG

(11) **EP 1 699 181 A1**
(43) Veröffentlichungstag der Anmeldung: **06.09.2006**
(21) Anmeldenummer: 05101570.9
(22) Anmeldetag: 01.03.2005
(51) Int. Cl.: H04L 12/46, H04L 29/12

(54) **Verfahren und System zur automatisierten Konfiguration eines Subnetzwerks innerhalb eines Netzwerkes**

(71) Anmelder: Swisscom AG, 3000 Bern 29 (CH)
(72) Erfinder: Granges, Emmanuel A., 3312, Fraubrunnen (CH)
(74) Vertreter: Scheuzger, Beat Otto

(57) **Zusammenfassung**

Die Erfindung betrifft ein Verfahren zur automatisierten Konfiguration eines Subnetzwerks (200/300) innerhalb eines Netzwerkes (100), wobei ein Konfigurationsmodul (10) ein Routingmodul (20/30) mit Konfigurationsdaten zur Anbindung eines Datentunnels (201,202/301,302,303) zwischen dem Routingmodul (20/30) und dem Netzwerkverbindungsgerät (21,22/31,32,33) konfiguriert, wobei ein Identifikationsmodul (12) und/oder das Routingmodul (20/30) derart konfiguriert werden, dass der Datentunnel (201,202/301,302,303) mittels eines Zugriffs des Routingmoduls (20/30) auf das Identifikationsmodul (12) identifizierbar ist, wobei ein DHCP-Server (13) und/oder das Routingmodul (20/30) derart konfiguriert werden, dass Netzwerkadressen des Subnetzwerks (200/300) mittels des DHCP-Servers (13) dynamisch konfigurierbar sind, und wobei über eine gesicherte Datenverbindung (421,422/431,432,433) das Netzwerkverbindungsgerät (21,22/31,32,33) mit Konfigurationsdaten zur Erstellung des Datentunnels (201,202/301,302,303) zwischen dem Netzwerkverbindungsgerät (21,22/31,32,33) und dem Routingmodul (20/30) konfiguriert wird.

## Beschreibung

Die vorliegende Erfindung betrifft ein Verfahren und ein System zur automatisierten Konfiguration eines Subnetzwerks innerhalb eines Netzwerkes, wobei das Netzwerk mindestens ein Identifikationsmodul und einen DHCP-Server umfasst, wobei das Subnetzwerk mindestens ein Routingmodul und ein oder mehrere Netzwerkverbindungsgeräte umfasst, und wobei das mindestens eine Routingmodul über ein Interface mit dem Netzwerk verbindbar ist. Die Erfindung betrifft insbesondere die automatisierte Konfiguration eines privaten Subnetzwerkes sowie die automatisierte Verwaltung von mehreren privaten Subnetzwerken.

Der elektronische Datenaustausch zwischen geographisch auseinander liegenden Standorten derselben Organisationseinheit wie z.B. eines Geschäftsunternehmens kann z.B. über das öffentliche Internet oder über private Mietleitungen zwischen diesen Standorten erfolgen. Für viele Anwendungen ist es unerwünscht, dass der elektronische Datenaustausch einer Organisationseinheit von Dritten manipulierbar und/oder einsehbar ist. Eine Möglichkeit, um einen solchen Datenzugriff für Dritte zu erschweren, ist die Verwendung von privaten Mietleitungen zwischen den geographisch getrennten Standorten der Organisationseinheit. Private Mietleitungen haben jedoch den Nachteil, dass sie teuer sind und dass der Unterhaltsaufwand gross ist. Der elektronische Datenaustausch zwischen geographisch auseinander liegenden Standorten wird deshalb vermehrt unter Verwendung des Internets und unter Verwendung von virtuellen privaten Netzwerken (Virtual Private Network: VPN) realisiert. Für die Verbindung von zwei Standorten über ein VPN wird beispielsweise zuerst ein erster Standort über eine erste, relativ kurze, private Mietleitung mit einem ersten virtuellen Router, einem so genannten virtuellen Edge Router, verbunden. Ausgehend von diesem ersten virtuellen Edge Router wird beispielsweise über das Internet eine so genannte Tunnelverbindung zu einem zweiten virtuellen Edge Router aufgebaut. Ausgehend vom zweiten virtuellen Edge Router wird anschliessend über eine zweite, wiederum relativ kurze, private Mietleitung eine Verbindung zu einem zweiten Standort hergestellt. Die Tunnelverbindung erfolgt dabei über ein kostengünstiges und flexibles Netzwerk wie das Internet. Eine solche Verbindung von zwei Standorten ist insbesondere bei einer grossen Distanz zwischen den Standorten gegenüber einer direkten Verbindung der Standorte über eine private Mietleitung mit geringeren Kosten und einem kleineren Unterhaltsaufwand realisierbar. Neben einer solchen Netzwerkstruktur für ein VPN sind auch viele andere Netzwerkstrukturen möglich. So lassen sich beispielsweise Standorte, welche schon über einen Netzwerkanschluss zu einem kostengünstigen Netzwerk wie das Internet verfügen, über direkte Tunnelverbindungen untereinander verbinden, womit private Mietleitungen ganz entfallen können. Um mehrere Standorte eines Geschäftsbetriebes mittels eines VPNs zu verbinden, können beispielsweise Tunnelverbindungen zwischen bestimmbaren Edge Routern oder Netzwerkanschlüssen erstellt werden und Datenpakete können mittels geeigneter Routingmechanismen innerhalb des VPNs zwischen diesen Standorten transportiert werden. Eine solche Lösung hat aber insbesondere den Nachteil, dass der Unterhaltsaufwand der Edge Router gross wird und zudem bei einer Unterteilung des VPNs in mehrere voneinander getrennte VPNs zusätzlich steigt. Für die Installation und den Unterhalt der Edge Router ist es notwendig, dass oft teure Spezialisten mit den notwendigen Kenntnissen eingesetzt werden müssen. Die Effizienz dieser Lösung ist dabei derart klein, dass eine Massenproduktion solcher VPNs sehr aufwendig und deshalb ungeeignet ist. Ein weiterer Nachteil dieser Lösung ist, dass zentrale Netzwerkdienste wie beispielsweise ein AAA-Server (Authentication, Authorization, Accounting) normalerweise für jedes der VPNs beispielsweise mittels eines Network Operation Centers separat unterhalten werden müssen, insbesondere für mehrere VPNs, welche sich auf von einander getrennte Geschäftsbetriebe beziehen.

In der Patentanmeldung EP 1 304 830 wird ein Verfahren für die Verwaltung von mehreren VPN Geräten beschrieben. In einem zentralen VPN Information Provider werden Konfigurationsdaten von VPN Geräten an verschiedenen Standorten unterhalten. Einem ersten VPN Gerät werden Konfigurationsdaten von mindestens einem zweiten VPN Gerät übermittelt, wobei gewisse Aspekte des ersten VPN Geräts von mindestens einem weiteren Verwaltungsmodul unterhalten werden. Die Patentanmeldung EP 1 304 830 hat jedoch insbesondere den Nachteil, dass die Initialisierung der VPN Geräte nicht automatisiert werden kann. Ein weiterer Nachteil ist es, dass das zur Verfügung stellen von zentralen Netzwerkdiensten weiterhin aufwendig bleibt.

Es ist eine Aufgabe dieser Erfindung, ein neues Verfahren und System für eine automatisierte Konfiguration eines privaten Subnetzwerks vorzuschlagen. Insbesondere soll die Konfiguration von Netzwerkverbindungsgeräten sowie von Netzwerkendgeräten des Subnetzwerks automatisiert erfolgen. Insbesondere soll das Verfahren die automatisierte Konfiguration von mehreren privaten Subnetzen ermöglichen, wobei zentrale Netzwerkdienste eines Subnetzwerks mit einem kleinen Aufwand zur Verfügung gestellt werden können.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen sowie aus der Beschreibung hervor.

Insbesondere werden diese Ziele durch die Erfindung dadurch erreicht, dass zur automatisierten Konfiguration eines Subnetzwerks innerhalb eines Netzwerkes das Netzwerk mindestens ein Identifikationsmodul und einen DHCP-Server umfasst, dass das Subnetzwerk mindestens ein Routingmodul und ein oder mehrere Netzwerkverbindungsgeräte umfasst, und dass mindestens ein Routingmodul über ein Interface mit dem Netzwerk verbindbar ist, wobei mittels eines Konfigurationsmoduls das mindestens eine Routingmodul mit Konfigurationsdaten zur Anbindung eines Datentunnels zwischen dem Routingmodul und dem Netzwerkverbindungsgerät konfiguriert wird, wobei mittels des Konfigurationsmoduls das Identifikationsmodul und/oder das Routingmodul derart konfiguriert werden, dass der Datentunnel mittels mindestens eines Zugriffs des Routingmoduls auf das Identifikationsmodul identifizierbar ist, wobei mittels des Konfigurationsmoduls der DHCP-Server und/oder das Routingmodul derart konfiguriert werden, dass Netzwerkadressen des Subnetzwerks mittels des DHCP-Servers dynamisch konfigurierbar sind, wobei eine gesicherte Datenverbindung zwischen dem Konfigurationsmodul und dem Netzwerkverbindungsgerät erstellt wird, und wobei mittels des Konfigurationsmoduls über die gesicherte Datenverbindung das Netzwerkverbindungsgerät mit Konfigurationsdaten zur Erstellung des Datentunnels zwischen dem Netzwerkverbindungsgerät und dem Routingmodul konfiguriert wird. Es sei an dieser Stelle erwähnt, dass statt eines DHCP-Servers gemäss RFC 2131 ein beliebiger anderer Server mit entsprechenden Funktionen für die Verwaltung von IP-Adressen, für das Verteilen von Informationen in IP-Netzwerken, usw. verwendbar ist. Dies hat u.a. den Vorteil, dass mittels der automatisierten Koordination der Konfigurationen der einzelnen Vorrichtungen (Netzwerkverbindungsgeräte, Routingmodule, zentrale Netzwerkdienste wie der DHCP-Server oder das Identifikationsmodul, usw.) die Funktion und die Sicherheit der Subnetzwerke und der zentrale Netzwerkdienste garantiert werden kann. Durch die geeignete Automatisierung dieser Konfigurationen kann zudem eine Effizienz erreicht werden, welche eine kostengünstige Massenproduktion solcher Subnetzwerke ermöglicht. Dies ist ein Merkmal, welches das hier beschriebene System gegenüber anderen Systemen des Standes der Technik entscheidend auszeichnet. Somit kann durch die erfindungsgemässe Art der Realisierung von Subnetzwerken, wie z.B. auch von VPNs, und der zentralen Administration unter Ausnützung und Kombination einer Vielzahl von Automatismen die Handhabung von VPNs für einen Dienstanbieter wie auch für einen Kunden wesentlich vereinfacht werden. So ist u.a. sowohl die Einbindung eines neuen Standortes, die Einbindung von Hosts (Server, Clients,...) und die Migration eines Servers von einem Standort zu einem anderen ohne Spezialistenwissen durchführbar. Insbesondere erlaubt die Anordnung der zentralen Netzwerkdienste für mehrere Subnetzwerke und deren zentrale Administration entsprechende Einsparungen des Network Operating Centers (NOCs).

In einer Ausführungsvariante umfasst das Netzwerk einen DNS-Server, wobei mittels des Konfigurationsmoduls der DNS-Server und/oder das Routingmodul derart konfiguriert wird, dass Domain Namen mittels des DNS-Servers auf dem Subnetzwerk definierbar und/oder abfragbar sind. Diese Ausführungsvariante hat u.a. den Vorteil, dass Domain Name Services mittels eines einzigen DNS-Servers für mehrere Subnetzwerke angeboten werden kann.

In einer Ausführungsvariante werden der DHCP-Server und/oder der DHCP-Server mittels des Konfigurationsmoduls derart konfiguriert, dass Domain Namen Einträge und/oder Host Namen Einträge und/oder Netzwerkadressen Einträge des DNS-Servers mittels des DHCP-Servers auf dem DNS-Server verwaltbar sind. Eine solche Ausführungsvariante hat u.a. den Vorteil, dass die Verwaltung des DNS-Servers automatisiert und vereinfacht werden kann.

In einer Ausführungsvariante werden mehrere Routingmodule einer Subnetzwerkerfassungseinheit zugeordnet, wobei mittels eines Routingmoduls jeweils mindestens ein Subnetzwerk realisierbar ist. Diese Ausführungsvariante hat u.a. den Vorteil, dass Routingmodule mittels programmierter Softwaremodule konfiguriert werden können und auf einer geeigneten Plattform wie beispielsweise einem programmierbaren Server effizient betrieben werden können.

In einer anderen Ausführungsvariante wird als Identifikationsmodul ein zentral verwaltbarer RADIUS-Server verwendet. Diese Ausführungsvariante hat u.a. den Vorteil, dass das Identifikationsmodul mittels einer gängigen Standardtechnologie realisiert werden kann, für welche es auf dem Markt leicht erhältliche, weit verbreitete und für verschiedene Server-Plattformen verfügbare Produkt-Implementationen gibt.

In einer weiteren Ausführungsvariante wird zur Verwaltung der DNS-Server-Einträge durch den DHCP-Server ein erweitertes DNS-Protokoll verwendet. Diese Ausführungsvariante hat u.a. den Vorteil, dass ein standardisiertes Protokoll mit für verschiedene Netzwerkumgebungen verfügbaren Protokoll-Implementationen verwendbar ist.

In einer wieder anderen Ausführungsvariante werden zur Identifikation des Datentunnels mindestens ein Identifikator und ein Passwort verwendet. Diese Ausführungsvariante hat u.a. den Vorteil einer höheren und/oder anpassbaren Sicherheit der Identifikation des Datentunnels.

In einer Ausführungsvariante werden bei einer dynamischen Konfiguration einer Netzwerkadresse des Subnetzwerks durch den DHCP-Server mittels eines dynamischen DNS-Updates Einträge des DNS-Servers aktualisiert. Diese Ausführungsvariante hat u.a. den Vorteil, dass mindestens gewisse Einträge des DNS-Servers automatisiert verwaltbar sind.

In einer Ausführungsvariante umfasst das Routingmodul und/oder das Identifikationsmodul und/oder der DHCP-Server und/oder der DNS-Server ein Firewallmodul zur Überwachung von Datenverbindungen, wobei das oder die Firewallmodule mittels des Konfigurationsmoduls mindestens derart konfiguriert werden, dass mindestens bestimmbare Datenverbindungen zwischen Subnetzwerken gesperrt sind. Es sei hier erwähnt, dass statt einer Sperrung einer Datenverbindung auch eine Umleitung der Datenverbindung oder irgendeine andere Manipulation der Datenverbindung durchführbar ist. Diese Ausführungsvariante hat u.a. den Vorteil, dass Zugriffe aus einem Subnetzwerk auf ein anderes Subnetzwerk gemäss spezifizierbaren Firewall-Regeln verhindert werden können.

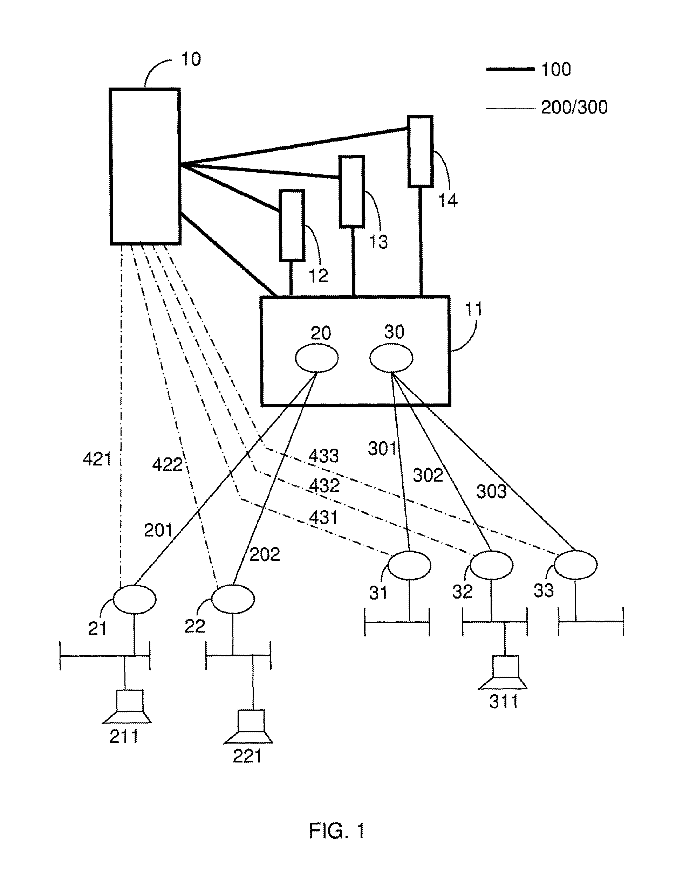

Nachfolgend wird eine Ausführung der vorliegenden Erfindung anhand eines Beispiels beschrieben. Das Beispiel wird durch die beigelegte Figur 1 illustriert.

Figur 1 zeigt schematisch den Aufbau eines Systems zur Ausführung der Erfindung. Das Netzwerk 100 umfasst ein Identifikationsmodul 12, einen DHCP-Server 13 und einen DNS-Server 14. In Figur 1 sind zwei Subnetzwerke 200/300 dargestellt, wobei das Subnetzwerk 200 das Routingmodul 20 sowie die Netzwerkverbindungsgeräte 21,22 umfasst, und wobei das Subnetzwerk 300 das Routingmodul 30 sowie die Netzwerkverbindungsgeräte 31,32,33 umfasst. Die Routingmodule 20/30 sind auf einer Subnetzwerkerfassungseinheit 11 zusammengefasst. Sowohl das Routingmodul 20 als auch das Routingmodul 30 sind über ein Interface mit dem Netzwerk 100 verbindbar. Die Netzwerkverbindungsgeräte 21,22/31,32,33 verfügen über geeignete Schnittstellen zum Anschluss von Netzwerkendgeräten wie beispielsweise von IP-Clients 211,221,311 gemäss dem Internet Protokoll (IP). Netzwerkverbindungsgeräte umfassen insbesondere Router, Modems, Switches, wie beispielsweise ADSL-Router oder ADSL-Modems, mit geeigneten Netzwerkschnittstellen wie beispielsweise einer ADSL-Netzwerkschnittstelle und einer Ethernet Netzwerkschnittstelle. Netzwerkverbindungsgeräte können aber auch ein Netzwerkendgerät mit geeigneten Mitteln zur Durchführung der Funktionen eines Netzwerkvermittlungsgeräts umfassen, wie beispielsweise ein Netzwerkendgerät mit einem USB (Universal Serial Bus) ADSL-Modem und gegebenenfalls einer Ethernet Netzwerkkarte. Netzwerkendgeräte umfassen insbesondere PC (Personal Computer), Laptops, Notebooks oder Handheld-Computer. Beispiele der Subnetzwerke 200/300 sind u.a. Virtual Private Networks (VPNs). Als Virtual Private Network (VPN) wird die Verbindung von internen (privaten) Systemen über nicht exklusiv benutzte Netzwerke bezeichnet. Als intern bzw. privat werden Systeme bezeichnet, welche untereinander Informationen austauschen, welche im Allgemeinen nicht öffentlich zugänglich sein sollen. Das Netzwerk zur Verbindung solcher Systeme muss über Eigenschaften verfügen, welche den privaten Charakter der ausgetauschten Informationen auf dem Transportweg sicherstellt und insbesondere vom Zugriff Dritter schützt. Private Netzwerke, welche ausschliesslich über eine dedizierte Infrastruktur wie beispielsweise Mietleitungen realisiert werden, werden nicht als VPN betrachtet. Die Realisierungsmöglichkeiten von VPNs sind vielfältig. Insbesondere können mehr oder weniger Teilnetze (Teilstrecken) eines VPN-Netzwerkes bzw. eines erfindungsgemässen Subnetzwerkes auf unterschiedliche Weise nicht exklusiv genutzt werden. Wird z.B. die Teilstrecke im Access exklusiv für ein VPN genutzt, aber die Teilstrecken im Edge und im Core zwischen mehreren VPNs geteilt, sprechen wir bereits von VPN. Die nicht exklusive Nutzung kann sich auch auf Netzelemente inklusive deren physikalischen Interfaces beziehen. Wir sprechen in der Folge deshalb im Zusammenhang mit VPNs auch von Virtuellen Routern (VR) und Virtuellen Interfaces (VI). Im vorliegenden Dokument wird im Zusammenhang mit den Virtuellen Routern (VR) auch von Routingmodulen 20/30 gesprochen. Für VPN sind diese beiden Begriffe für dieses Dokument als Synonyme zu betrachten.

Diese Eigenschaft der nicht exklusiven Nutzung kann auch auf Netzwerk-Dienste angewendet werden, (1) welche die Konfiguration von Teilsystemen (z.B. IP-Clients 211, 221, 311) erleichtern, (2) welche den Transport der Daten innerhalb des VPNs vereinfachen, (3) welche den Gebrauch bzw. das Auffinden von Informationen im VPN ermöglichen, (4) welche die Anbindung an weitere Netzwerke wie beispielsweise ein öffentliches Netzwerk ermöglichen oder (5) welche innerhalb eines Netzwerkes andere Funktionen übernehmen. Dabei ist es wesentlich, dass trotz der gemeinsamen Nutzung solcher Netzwerk-Dienste durch mehrere VPNs der private Charakter der Nutzung durch jedes einzelne VPN erhalten bleibt. Solche Netzwerk-Dienste bezeichnen wir als Virtual Private Network Services (VPNS). Die geeignete Kombination einer bestimmten Art von VPNs, wie z.B. Virtual Private Routed Network (VPRN), mit entsprechenden Diensten ist der Gegenstand dieses Dokumentes und des damit zusammenhängenden Patentvorschlages.

Die wesentlichen Eigenschaften eines VPNs sind u.a. die Verbindung von Systemen mit internen (privaten) Daten und die Verbindung solcher Systeme über nicht exklusiv benutzte Netzwerke inkl. zugehöriger Netzwerk-dienste. Als System wird sowohl ein einzelnes Computersystem wie auch ein privates Netzwerk, welches aus mehreren solchen Computersystemen und aus weiteren Netzwerkkomponenten bestehen kann, betrachtet. Die Schnittstelle, auch Service Access Point (SAP) genannt, zum VPN-Netzwerk bildet somit das interne IP-Interface des Netzwerkverbindungsgeräts, wie beispielsweise eines so genannten Customer Premises Equipment (CPE) 21,22/31,32,33, bzw. das LAN-Interface derjenigen Komponente, welche die (virtuelle) Verbindung zum VPN abschliesst. In der Folge werden als Beispiel IP-VPNs betrachtet, womit innerhalb der VPNs geroutete IP-Netzwerke unterstützt werden. Je nach VPN-Typ können auch weitere Netzwerk-Funktionen entsprechend unterstützt werden. Grundsätzlich werden drei Typen von VPNs verwendet: (1) Intranet-VPN, (2) Remote-Access-VPN und (3) Extranet-VPN.

Ein Intranet-VPN ist der Teil eines VPN's und damit eines Netzwerkes, welcher firmeninterne (private) Standorte miteinander so verbindet, dass ein im wesentlichen uneingeschränkter Austausch von Informationen mittels IP und eine im wesentlichen uneingeschränkte gegenseitige Erreichbarkeit der Systeme innerhalb dieser Standorte auf IP-Ebene ermöglicht wird. So ist es möglich, einen IP-Server an einem beliebigen Standort innerhalb des Intranet-VPN's anzuschliessen. Dieser IP-Server ist innerhalb des VPN's von allen anderen IP-Systemen aus erreichbar. Ein Remote-Access-VPN ist der Teil eines VPN's, welcher einen einseitigen und vollständigen Zugriff eines Systems auf alle Systeme innerhalb des VPN's ermöglicht. Es kann vorgesehen sein, dass Systeme, welche via Remote-Access-VPN mit dem VPN verbunden sind, direkt IP-Dienste für andere Systeme des VPN's zur Verfügung stellen. Ein Extranet-VPN ist der Teil eines VPN's, welcher einen eingeschränkten, kontrollierten und sicheren Zugriff auf Teilbereiche eines VPN's ermöglicht. Die Einschränkung kann z.B. sowohl zeitlich wie auch auf bestimmte Dienste oder Funktionen (z.B. nur Leseberechtigung) beschränkt sein.

Das IP-Interface des CPE's (Customer Premises Equipment) 21,22/31,32,33 kann die Schnittstelle zum VPN-Netzwerk bilden. Der Transport von IP-Paketen und damit die Bildung eines VPN's können auf unterschiedliche Weise erfolgen. Entscheidend ist dabei, dass mindestens ein Teil jeder CPE-Verbindung zu einem anderen Teil des VPN's über ein nicht dediziertes Teil-Netz erfolgt. IP-Pakete können innerhalb eines VPN-Netzwerkes direkt mittels Protokollen der darunter liegende ISO-OSI-Schicht 2 vermittelt werden oder durch Protokoll-Verschachtelung auch mittels Protokollen der Schicht 3 oder höherer Schichten transportiert werden. Dabei ist es entscheidend, dass der private Charakter der Daten beibehalten bleibt. Es kann u.a. zwischen folgenden zwei Möglichkeiten, diesen privaten Charakter beizubehalten, unterschieden werden: (1) Durch Ver- und Entschlüsselung der IP-Pakete bei Ein- und Austritt in bzw. aus einer VPN-Teilstrecke und Vermittlung von verschlüsselten IP-Paketen in öffentlichen Netzwerken, welche diese VPN-Standorte verbinden. (2) Durch gezielte Trennung der Vermittlung der IP-Pakete unterschiedlicher VPNs über private Netzwerke. Solche VPNs oder Subnetzwerke werden auch als Virtual Private Routed Network (VPRN) bezeichnet. Dabei ist unter Umständen keine Verschlüsselung mehr notwendig, da keine öffentlichen Netzwerke verwendet werden.

Es sei an dieser Stelle erwähnt, dass die genannten Funktionen nicht nur auf der Stufe von IP-Paketen implementierbar sind. Beispielsweise kann eine Verschlüsselung auch auf einer ISO-OSI-Schicht unterhalb der IP-Schicht erfolgen, wobei eine solche Verschlüsselung beispielsweise unter der Kontrolle des Konfigurations- bzw. des Identifikationsmoduls erfolgt. Die Vertraulichkeit einer Datenübertragung muss jedoch nicht unter direkter Kontrolle der eben genannten Module stehen, sondern kann ohne Weiteres aufgrund anderer Tatsachen, wie beispielsweise aufgrund eines Netzes welches unabhängig kontrolliert wird oder aufgrund eines Netzes welches galvanisch von anderen Netzen getrennt ist, erfolgen.

Verschlüsselte VPNs werden heute meistens mittels IPSec (IP Security) oder SSL (Secure Sockets Layer) realisiert. Diese Protokolle besitzen unterschiedliche Merkmale in Bezug auf die Stärke der Verschlüsselung und in Bezug auf die Verwendung von Schlüsseln. Diese Art VPNs zu realisieren steht nicht im Fokus dieses Dokumentes, da aus Produktionssicht wesentliche Nachteile in Bezug auf die Produktionskosten (Komplexität, Ressourcenbedarf) und auch auf die Charakteristiken des Datentransportes (Delay, Jitter) bestehen. Da die Patentidee allgemein von Tunnels als VPN-Teilstrecken ausgeht, ist jedoch die Möglichkeit, Tunnels mittels IPSec, mittels SSL oder mittels irgendeiner anderen Verschlüsselungstechnik wie beispielsweise einer Verschlüsselungstechnik auf einer Layer 2 Schicht, auf einer Layer 7 Schicht oder auf irgendeiner anderen Schicht des ISO-OSI-Schichtenmodels zu realisieren, grundsätzlich auch mit einzubeziehen.

Bei VPRNs (Virtual Private Routed Networks) wird die Trennung zwischen den einzelnen VPNs im selben Netzwerk durch dediziertes Routing (Vermittlung in Netzknoten) realisiert. Hierzu ist es notwendig, dass jedes Paket, welches in ein VPN eintritt, speziell als zu einem spezifischen VPN zugehörig gekennzeichnet wird, um durch die Netzknoten entsprechend behandelt zu werden. Je nach ISO-OSI-Protokollschicht werden unterschiedliche Techniken verwendet. Meistens wird auf der jeweiligen Schicht das Paket derart verändert oder ergänzt, dass es durch den Routingalgorithmus der Netzknoten spezifisch behandelt werden kann. Bei Ethernet können z.B. VLAN-Tags verwendet werden. Eine IP-in-IP-Verschachtelung in der Schicht 3 ist auch denkbar. Ein Protokoll, welches diese Technik verwendet, ist Multiprotocol Label Switching (MPLS). Diese Techniken können alle als Tunneling-Techniken betrachtet werden. Für die Beschreibung der Patentidee ist es grundsätzlich unerheblich, welche Tunneling-Technik verwendet wird. Auch die Verwendung von Tunnel-Techniken wie IPSec oder SSL ist denkbar. Die Tunnels werden verwendet, um die CPE bzw. die SAP (Service Access Point) mit einem Virtuellen Router (VR) zu verbinden. Als Teil des VPRN-Routings können Firewall-Regeln (Paket-Filter) die Trennung der einzelnen VPRNs ergänzen und zum Routing-Entscheid beitragen. Wie bei Firewalls möglich, wird auch hier auf Informationen der darunterliegenden Schicht (Interface, auch virtuelles Interface) zurückgegriffen.

Eine demilitarisierte Zone (DMZ) wird derjenige Teil eines Netzwerkes genannt, welcher sich zwischen einem öffentlichen Netzwerk (meistens das Internet) und einem privaten Netzwerk befindet. In diesem Netzwerk befinden sich in der Regel spezielle Systeme eines privaten Netzwerkes, welche aus dem Internet heraus erreichbar sein müssen, geschützt werden müssen, aber nicht so sensitiv sind, dass diese innerhalb des privaten Netzwerkes selbst aufgebaut sein müssen. In diesem Zusammenhang wird zwischen einer eigentlichen DMZ und den VPRNs ein Netzwerk aufgebaut, welches Systeme enthält und welches mehreren VPRNs gegenüber Dienste anbietet. Dieses Netzwerk ist auch eine Art DMZ. Wir nennen diese DMZ "Virtual DMZ" (VDMZ). Innerhalb eines Netzwerkes, welches VPRNs realisiert, sind eine oder mehrere Komponenten vorhanden, welche die VRs bzw. Routingmodule 21/22 implementieren. Diese Komponenten werden VPRN-Konzentratoren oder Subnetzwerkerfassungeinheit 20 genannt. Eine VDMZ wird an jeden dieser VRs oder Routingmodule 21/22 über ein virtuelles Interface angeschlossen und in jeden VPRNinternen Routing-Prozess einbezogen. Analog den Mechanismen für den Datenverkehr innerhalb des VPRNs werden für die IP-Pakete in die VDMZ hinein oder aus der VDMZ heraus entsprechende Firewall-Regeln implementiert. Damit wird sichergestellt, dass einerseits nur die entsprechenden Dienste aus der VDMZ bezogen werden können und andererseits kein ungewollter Kurzschluss über die VDMZ zwischen mehreren VPRNs stattfinden kann. Da der vollständige Routing-Prozess (inkl. Firewall-Funktionalitäten wie Spoofing-Schutz) durch den VPRN-Netzbetreiber kontrolliert wird, kann auch sichergestellt werden, dass Routing-Manipulationen ausgeschlossen sind.

Die Systeme innerhalb der VDMZ bieten Dienste für mehrere VPRNs an. Grundsätzlich befinden sich auf einem VDMZ-System durchaus Informationen aus verschiedenen VPRNs, welche jedoch nur den jeweiligen Benutzern eines VPRNs zur Verfügung gestellt werden sollen. Durch den kontrollierten (Firewall inkl. Anti-Spoofing) Anschluss von VDMZ-Systemen an VPRNs ist sichergestellt, dass nur Anfragen legitimierter VPRNs eintreffen und damit bereits ein gewisser Schutz geboten ist. Nun ist es jedoch noch notwendig sicherzustellen, dass nur die Benutzer eines bestimmten VPRNs auf die Informationen des jeweiligen VPRNs zugreifen können. Hierzu dienen so genannte Access Control Lists (ACL), welche für jeden Dienst die Verbindung zwischen Inhalt einer Anfrage und der Legitimation durch Überprüfung der VPRN-Zugehörigkeit sicherstellen. Die VPRN-Zugehörigkeit wird in der Regel über die IP-Adressen bzw. Ports erfolgen können. Dies trifft auf alle Dienste zu, welche innerhalb eines bereits erstellten VPRN's angeboten werden. Die Patentidee umfasst jedoch insbesondere die einfache Bildung eines VPRN's und die einfache und automatische Integration von Systemen in ein VPRN. Beim Dynamic Host Configuration Protocol (DHCP) handelt es sich um ein Protokoll, welches eben diese automatische Integration inkl. IP-Adress-Zuteilung vornimmt. Deshalb kann bei diesem VDMZ-System nicht auf die VPRN-Zugehörigkeit anhand der IP-Adresse und des Ports abgestellt werden. Da der VPRN-Netzbetreiber auch die DHCP-Relay-Agent in den CPE's kontrolliert, kann einerseits auf die in der DHCP-Relay-Message enthaltene MAC-Adresse (ISO-OSI-Schicht 2) zurückgegriffen werden. Diese MAC-Adresse ist weltweit eindeutig und kann vor der Auslieferung des CPE's festgestellt werden. Somit ist auch bei DHCP eine Zuordnung zum VPRN möglich. Als Alternative zur MAC-Adresse kann durchaus eine andere eindeutige Kennung des CPE's in die DHCP-Relay-Message integriert werden, so dass die Identifikation auch ohne MAC-Adresse möglich ist. Durch die Tatsachen einerseits, dass sich ein CPE 30/31/32/33/34 nur mittels autorisiertem Tunnel mit dem VR bzw. Routingmodulen 21/22 verbinden kann und andererseits die Kombination von vorkonfigurierter LAN-IP-Adresse und MAC-Adresse in der DHCP-Relay-Message, ist sichergestellt, dass kein "fremdes" CPE und kein VPN-fremdes LAN die Dienste des DHCP-Servers in Anspruch nehmen kann.

Die Koordination der Konfigurationen der einzelnen Systeme (CPE, Routingmodule 20/30 (VR), Firewall, VDMZ-Systeme, usw.) kann entscheidend sein, um die Funktion und Sicherheit der VPRNs selbst und der Zusatzdienste zu garantieren. Durch eine geeignete Automatisierung dieser Konfigurationen kann zudem eine Effizienz erreicht werden, welche eine kostengünstige Massenproduktion solcher Dienste ermöglicht. Dies ist das entscheidende Merkmal, welches das in diesem Dokument beschriebene System gegenüber anderen Systemen, falls es ähnliche Systeme geben sollte, auszeichnet. Ein erfindungsgemässes Subnetzwerk, wie z.B. ein VPRN, wird erzeugt, indem bei der Konfiguration des Routingmoduls 20/30, wie z.B. ein Virtual Router (VR), bestimmt wird, welche Interfaces sich mit einem bestimmten Routingmodul 20/30 (VR) verbinden können. Die oben beschriebenen Tunnel sind durch einen entsprechenden Identifier erkennbar. Bei PPP (Point to Point Protocol) und IPSec sind dies Username und Passwort, bei VLAN (Virtual Local Area Network) und MPLS (Multiprotocol Label Switching) die zusätzliche Information im Header der Pakete. Wir fokussieren in dieser Beschreibung auf PPP. PPP ist ein Tunneling-Protokoll, welches beim dynamischen Aufbau ein Username und ein Passwort verlangt. Somit genügt es, bei der Konfiguration des Routingmoduls 20/30 (VR) anzugeben, dass PPP-Tunnels mit entsprechender Username/Passwort-Kombination ein dynamisches Interface zum entsprechenden Routingmodul 20/30 (VR) bilden dürfen. Die Koordination der Konfigurationen der einzelnen Systeme (CPE, Routingmodule 20/30 (VR), Firewall, VDMZ-Systeme, usw.) in einem Subnetzwerk wird erfindungsgemäss mittels eines Konfigurationsmoduls 10 erreicht. Das Konfigurationsmodul kann unterschiedliche Aufgaben übernehmen. Z.B. ordnet das Konfigurationsmodul 10 dem Subnetzwerk mindestens eine definierbare Domain, eine DNS-Server-Adresse und eine DHCP-Sever-Adresse zu und speichert sie in einer Routing Tabelle des Routingmoduls 20/30 ab. Zur Initialisation eines Netzwerkverbindungsgerätes 21,22/31,32,33 wie z.B. einem CPE, kann ein gesicherter Datentunnel 201,202/301,302,303 zwischen dem Netzwerkverbindungsgerät 21,22/31,32,33 und dem Konfigurationsmodul 10 aufgebaut werden. Der Datentunnel kann z.B. einer seriellen Verbindung basieren. Das Konfigurationsmodul 10 konfiguriert das Netzwerkverbindungsgerät 21,22/31,32,33 mittels dem Subnetzwerk zugeordneter freier dynamischer oder statischer Netzwerk-Adressen und speichert die Konfiguration in der Routing Tabelle des Routingmoduls 21/22 (VR) ab. Das Konfigurationsmodul 10 aktualisiert die Einträge des DHCP-Servers 12 entsprechend der zugeordneten freien dynamischen oder statischen Netzwerkadresse des Netzwerkverbindungsgerät 21,22/31,32,33, wobei der DHCP-Server 13 Netzwerk-Adressen-Einträge des DNS-Servers 14 verwaltet.

Somit kann eine erste Aufgabe des Konfigurationsmoduls 10 sein, Routingmodul 20/30 (VR) und logische Interfaces zu definieren und die Verbindung zueinander herzustellen. Diese Funktion gehört zu den Grundfunktionen einer Subnetzwerkerfassungeinheit 11, wie z.B. einem VPRN-Concentrator. Ebenso wird jedem logischen Interface ein Satz Firewall-Regeln zugeordnet. Zu den Grundfunktionen des Concentrators gehören spezifische Firewall-Regeln, welche zwischen IP-Datenverkehr von und nach logischen Interfaces des VR und dem restlichen IP-Datenverkehr unterscheiden können. Zur späteren Integration von VPN-Diensten aus der VDMZ müssen nun spezifische Firewall-Regeln erstellt werden, welche aus dem "restlichen IP-Datenverkehr" den zulässigen VDMZ-IP-Datenverkehr herausfiltert. Das Konfigurationsmodul 10 speichert diese Angaben (Spezifitäten der Firewall-Regeln und die Angaben zu den logischen Interfaces) in der eigenen VPN-Datenbank. Erfindungsgemäss ist die Koordination dieser spezifischen Regeln mit den Konfigurationen (z.B. ACL) der jeweiligen VPN-Dienste in der VDMZ wichtig. In Kombination mit der Tatsache, dass der Betreiber der VDMZ-VPN-Dienste auch den VPN-Concentrator 11 und die CPEs 21,22/31,32,33 - und damit das gesamte Routing der VPN's inkl. Zugangskontrolle - unter Kontrolle hat, lässt sich die gesamte Zugriffskontrolle auf virtuelle VPN-Dienste in der VDMZ realisieren.

Wie oben erwähnt, kann die Kontrolle des CPE's 21,22/31,32,33 und/oder der Netzwerkendgeräte 211,221/311 durch den Betreiber des VPN-Dienstes entscheidend sein, um die Gesamtintegrität des Dienstes sicherzustellen. Deshalb kann die zweite Aufgabe des Konfigurationsmoduls 10 sein, den bei der VR-Definition angegebenen Identifier auch im CPE 21,22/31,32,33 entsprechend zu konfigurieren und diese Konfigurationen vor dem Zugriff Dritter zu schützen. Gleichzeitig liest das Konfigurationsmodul 10 aus dem CPE 21,22/31,32,33 die Ethernet-MAC-Adresse aus und fügt diese dem entsprechenden Interface-Eintrag in der VPN-Datenbank hinzu. Es kann auch ein alternativer Identifier verwendet werden. Im Fall von PPP ist der indirekte Prozess der übliche, wonach der ISP in seinen Systemen die Konfiguration vornimmt und dem Benutzer meist auf dem Postweg oder auch online die Konfigurationen für das CPE 21,22/31,32,33 mitteilt. Der Benutzer gibt dann die Konfigurationen in sein CPE 21,22/31,32,33 ein und kann sich somit mit dem ISP verbinden. Hier unterscheiden sie sich, indem das Konfigurationsmodul 10 diese Schritte automatisiert vorgenommen hat. Das konfigurierte CPE 21,22/31,32,33 kann nun an ein Netz angeschlossen werden und die Verbindung zum Routingmodul 20/30 (VR) herstellen. Grundsätzlich ist es möglich, die einem Interface zugeordneten IP-Subnetze bei der Konfiguration des Routingmodul-Interfaces, wie z.B. des VR-Interfaces, und zugeordneten CPE's 21,22/31,32,33 festzulegen. Dieser Schritt kann jedoch auch erfolgen, nachdem das CPE 21,22/31,32,33 sich mit dem Routingmodul 20/30 (VR) verbunden hat. Das Konfigurationsmodul 10 kann zunächst auf dem Routingmodul 20/30 (VR) die Konfigurationen vornehmen und danach über die PPP-Verbindung via Remote-Access das Ethernet-Interface entsprechend konfigurieren.

Da DHCP beim Aufbau des VPN's bzw. der Integration und Verwaltung von IP-Systeme verwendet wird und nicht als IP-Dienst innerhalb eines VPN betrachtet wird, wird dieser VDMZ-Dienst hier einzeln betrachtet. Die weitere Konfiguration der IP-Subnetze übernimmt ein DHCP-Server 13. Dieser DHCP-Server 13 kann entweder im CPE 21,22/31,32,33 implementiert werden oder als zentraler VPN-Dienst in der VDMZ realisiert werden. Im zweiten Fall wird auf die DHCP-Relay-Funktion des CPE's 21,22/31,32,33 zurückgegriffen. Eine weitere Aufgabe des Konfigurationsmoduls 10 ist es, die Konfiguration des zentralen VPN-Dienstes in der VDMZ vorzunehmen. Wesentliches Merkmal ist es, die entsprechenden Subnetze entsprechend den Interface-Einträgen aus der Datenbank des Konfigurationmoduls 10 zu entnehmen und im DHCP-Server 13 zu konfigurieren. Zu diesen Einträgen gehört neben dem IP-Subnetz die aus dem CPE 21,22/31,32,33 entnommene Ethernet-MAC-Adresse bzw. der alternative Identifier. Dieser Identifier wird nun verwendet, um die ACL des DHCP-Servers 13 zu konfigurieren. Da DHCP-Relay üblicherweise die MAC-Adresse des Ethernet-Interfaces als Identifier verwendet, kann jede einzelne weitergeleitete DHCP-Anfrage durch die ACL des DHCP-Servers 13 überprüft werden. Damit wird sichergestellt, dass in Kombination mit den anderen Schutzmechanismen (Firewall, Anti-Spoofing, ...) der gemeinsamen Nutzung eines DHCP-Servers 13 für mehrere VPN in Bezug auf die Trennung der VPNs hinreichende Mechanismen vorhanden sind. Es ist grundsätzlich möglich, mehrere IP-Subnetze am selben oder einem weiteren Ethernet-Port des CPE's 21,22/31,32,33 zu betreiben. Die Ausführungen in dieser Beschreibung beziehen sich sinngemäss immer auf alle (mehrere) IP-Subnetze, selbst wenn von einem IP-Subnetz gesprochen wird. Innerhalb eines Subnetzwerkes, wie z.B. eines VPRN, ist es grundsätzlich möglich, wiederum ein VPRN aufzubauen. Das eine (aussenliegende) VPRN würde lediglich als Transport-Netzwerk für das neue (innenliegende) VPRN dienen. Ähnlich wie im Fall der Verwendung des Internets als Transport-Netzwerk müsste auf die Realisierung von VPRNs mit verschlüsselten Tunnels (IPSec) zurückgegriffen werden. Nach der Konfiguration der IP-Subnetze und des DHCP-Dienstes können IP-Endsysteme, d.h. die Netzwerkendgeräte 211,221/311 automatisch in das VPN integriert werden. Hierbei genügt es, diese Systeme als DHCP-Clients zu konfigurieren. Dies ist die übliche Standardkonfiguration für Systeme mit Ethernet-Netzwerkinterfaces. Ist das VPRN konfiguriert, kann nun für alle IP-Dienste in der VDMZ auf die IP-Adresse als Identifier zurückgegriffen werden. Das Konfigurationsmodul 10 kann damit die weiteren Aufgaben, die Konfiguration der Firewall-Regeln und ACL weiterer IP-Dienste, basierend auf den IP-Adressen vornehmen. Dies ermöglicht z.B. Netzwerkdienste wie Domain Name System (DNS) 14 in der VDMZ auf einem Server für mehrere VPNs zu betreiben.

Zusammenfassend kann gesagt werden, dass ein erfindungsgemässes Subnetzwerk, wie z.B. ein VPRN, auf dem Konzept des erfindungsgemässen Routingmoduls 20/30, wie z.B. eines Virtual Routers VR, basiert. Das Routingmodul 20/30 (VR) ist ein Router, das aus logischer Sicht grundsätzlich die gleichen Funktionen, z.B. eine eigene Routingtabelle etc., wie ein Router umfasst. Die Interfaces des Routingmoduls 20/30 können ebenso virtuell sein (Virtual Interface). Damit wird jeder Tunnel-Endpunkt eines beliebigen Tunnelingsverfahrens, wie z.B. PPP, IPSec oder auch MPLS ein potentielles Interface. Im VPRN-Konzept kann ein solches Routingmodul 20/30 mit synchronisierten Filterregeln (Firewall) kombiniert sein, womit sichergestellt wird, dass eine differenzierte Behandlung von IP-Paketen je nach Zugehörigkeit zur Routing-Domain möglich ist. Damit wird erreicht, dass IP-Pakete z.B. innerhalb der Routing-Domain uneingeschränkt ausgetauscht werden können, IP-Pakete mit Quell- und Ziel-IP-Adressen, welche nicht zur Routing-Domain gehören, differenziert behandelt werden können. Hiermit wird ein Schutz der Routing-Domain erreicht und der private Charakter des Subnetzwerkes (VPRN) unterstrichen.

Weitergehende Netzwerkdienste können mit der Routing-Domain synchronisiert werden, um PnP-VPNs, d.h. PnP-Subnetzwerke, zu realisieren, welche zentrale Netzwerkdienste nutzen. Dabei wird im Wesentlichen die Routing-Information des VPRN mit dem entsprechenden Netzwerkdienst synchronisiert und dadurch ermöglicht, denselben Netzwerkdienst mit einer zentralen Infrastruktur mehreren Subnetzwerken (VPRN) anzubieten. Die Konfiguration des DHCP-Servers 13 kann so vorgenommen werden, dass für jedes zu einem Tunnel eines VPRNs gehörende Subnetz die im VPRN definierten IP-Adressen und weiteren Konfigurationsparametern so verwaltet werden, dass die Eigenschaften des VPRN respektiert werden. Ein Teil des IP-Adressbereiches wird durch das Administrationssystems direkt verwaltet und ermöglicht hiermit auch statische Einträge (IP-Adressen). Der private Adressbereich 10.0.0.0/8 wird nicht überlappend auf die VPRN aufgeteilt, um die Eindeutigkeit der Zugehörigkeit zu einem IP-Subnetz und damit zum Standort eines VPRNs zu gewährleisten. Die Konfiguration des DNS-Servers 14 kann einerseits vor Inbetriebnahme des VPRNs synchronisiert mit dem VPRN vorgenommen werden. Dabei wird je VPRN eine Domain konfiguriert. Anderseits kann der DHCP-Server 14 die DNS-Einträge z.B. mittels eines erweiterten DNS-Protokolls aktualisieren, wobei der freibleibende IP-Adressbereich und die zugehörigen DNS-Namen für statische IP-Adressen durch das Konfigurationsmodul 10 verwaltet werden kann. Die Tunnels jedes VPRNs können durch ein zentrales Identifikationsmodul 12, wie z.B. einen zentralen RADIUS-Server, verwaltet werden. Die Synchronisation erfolgt hier durch systematische strukturierte Vergabe von Login-IDs durch das Administrationssystems. Die Konfiguration der Router kann durch das Administrationssystem erfolgen, indem Login-ID (VPRN und RADIUS), Passwort (RADIUS), Subnetz (VPRN, DHCP 13, DNS 14), DHCP-Relay-IP-Adresse entsprechend den Konfigurationen auf den zentralen Komponenten erfolgen.

Das erfindungsgemässe Verfahren kann wie folgt erfolgen:
(1) Die Customer Premises Equipment 21,22/31,32,33 (CPE) werden vor der Auslieferung so konfiguriert, dass diese beim Einschalten (oder auch Neustart) des CPEs den Tunnel zum zugehörigen Routingmodul 20/30, wie z.B. einem Virtual Router, automatisch aufbauen. Die gesicherte Verbindung zur Konfiguration des CPEs wie beispielsweise eine serielle Verbindung gemäss dem RS232 Standard oder gemäss dem USB (Universal Serial Bus) Standard zum CPE besteht nur für die initiale Konfiguration. Jeder Tunnel wird anhand von Identifikator und Passwort via RADIUS-Server identifiziert und in der Subnetzwerkerfassungeinheit 11 (VPRN-Concentrator: VPRN-C) dem korrekten VPRN zugewiesen. Bei Tunnel-Protokollen, wie z.B. IPSec, können weitere Parameter zur Tunnel-Identifikation abgestimmt werden (Identifikator: CPE 21,22/31,32,33, VPRN-C 11, RADIUS-Server 12; Passwort: CPE 21,22/31,32,33, RADIUS-Server 12).
(2) Jedem CPE 21,22/31,32,33 wird anlässlich der Konfiguration oder später nach Auslieferung über Remote Management ein IP-Subnetz zugewiesen. Dasselbe IP-Subnetzwerk wird im VPRN-C 11 in den Routing-Regeln konfiguriert. Das CPE 21,22/31,32,33 und im VPRN-C 11 konfigurierte IP-Subnetzwerk wird im DHCP-Server 13 so konfiguriert, dass Anfragen aus dem IP-Subnetzwerk des entsprechenden CPE 21,22/31,32,33 korrekt beantwortet werden. Im CPE 21,22/31,32,33 wird hierzu die DHCP-Relay Funktion verwendet, welche bei der Konfiguration des CPE entsprechend konfiguriert wurde. Jedes IP-Subnetzwerk wird in der Konfiguration des DHCP-Servers 13 der zugehörigen DNS-Domain zugewiesen (IP-Subnetz: CPE 21,22/31,32,33, VPRN-Routing -> VPRN-Firewall-Regeln, DHCP-Server 13; DHCP-Relay: CPE 21,22/31,32,33, DHCP-Server 13; DNS-Domain: DHCP-Server 13, DNS-Server 14).
(3) Die Anmeldung eines Hostes, d.h. eines Netzwerkendgerätes 211,221/311, in ein VPRN geschieht folgendermassen: (i) Im Betriebssystem des Hostes werden alle Netzwerkparameter so eingestellt, dass diese via DHCP bezogen werden. (ii) Damit erhält das Netzwerkendgerät 211,221/311 (Host), sobald dieses in ein Subnetz angeschlossen wird, eine IP-Adresse samt Netzmaske, die Domain, die DNS-Server 14 und weitere Parameter zugewiesen. (iii) Bei der DHCP-Anfrage kann das Netzwerkverbindungsgerät 21,22/31,32,33 einen Host-Namen mitgeben, welcher durch den DHCP-Server 13 via dynamisches DNS (DDNS) Update dem DNS-Server 14 mitgeteilt wird. (iv) Nun ist das Netzwerkendgerät 211,221/311 via "hostname.domain.ch" innerhalb des Subnetzwerkes, d.h. innerhalb des VPRNs erreichbar und kann alle anderen Netzwerkendgeräte 211,221/311 im VPRN erreichen.

An dieser Stelle sei erwähnt, dass die hier verwendeten Bezeichnungen eines DHCP-Servers, eines Identifikationsmoduls und eines DNS-Servers einer verständlichen Darstellung der Erfindung dienen. Ein DHCP-Server, ein Identifikationsmodul und ein DNS-Server können in einer Vielzahl von Ausführungsvarianten und insbesondere als einzelnes Servermodul implementiert sein, wobei das erfindungsgemässe Verfahren jedoch durch ein solches Servermodul in analoger Weise durchgeführt wird. Es sind auch Servermodule bekannt, welche zwar vom Fachmann anders benannt werden, jedoch wieder die entsprechenden Funktionen umfassen. Beispielsweise sei ein WINS-Server (Windows Internet Naming Service) genannt, mittels welchem das erfindungsgemässe Verfahren in analoger Weise durchführbar ist und mittels welchem insbesondere auch weitere netzrelevante Parameter verwaltbar sind.

## Patentansprüche

1. Verfahren zur automatisierten Konfiguration eines Subnetzwerks (200/300) innerhalb eines Netzwerkes (100), wobei das Netzwerk (100) mindestens ein Identifikationsmodul (12) und einen DHCP-Server (13) umfasst, wobei das Subnetzwerk (200/300) mindestens ein Routingmodul (20/30) und ein oder mehrere Netzwerkverbindungsgeräte (21,22/31,32,33) umfasst, und wobei das mindestens eine Routingmodul (20/30) über ein Interface mit dem Netzwerk (100) verbindbar ist, **dadurch gekennzeichnet,**
**dass** mittels eines Konfigurationsmoduls (10) das mindestens eine Routingmodul (20/30) mit Konfigurationsdaten zur Anbindung eines Datentunnels (201,202/301,302,303) zwischen dem Routingmodul (20/30) und dem Netzwerkverbindungsgerät (21,22/31,32,33) konfiguriert wird,
**dass** mittels des Konfigurationsmoduls (10) das Identifikationsmodul (12) und/oder das Routingmodul (20/30) derart konfiguriert werden, dass der Datentunnel (201,202/301,302,303) mittels mindestens eines Zugriffs des Routingmoduls (20/30) auf das Identifikationsmodul (12) identifizierbar ist,
**dass** mittels des Konfigurationsmoduls (10) der DHCP-Server (13) und/oder das Routingmodul (20/30) derart konfiguriert werden, dass Netzwerkadressen des Subnetzwerks (200/300) mittels des DHCP-Servers (13) dynamisch konfigurierbar sind,
**dass** eine gesicherte Datenverbindung (421,422/431,432,433) zwischen dem Konfigurationsmodul (10) und dem Netzwerkverbindungsgerät (21,22/31,32,33) erstellt wird, und
**dass** mittels des Konfigurationsmoduls (10) über die gesicherte Datenverbindung (421,422/431,432,433) das Netzwerkverbindungsgerät (21,22/31,32,33) mit Konfigurationsdaten zur Erstellung des Datentunnels (201,202/301,302,303) zwischen dem Netzwerkverbindungsgerät (21,22/31,32,33) und dem Routingmodul (20/30) konfiguriert wird.

2. Verfahren nach Anspruch 1, **dadurch gekennzeichnet, dass** das Netzwerk (100) einen DNS-Server (14) umfasst, und dass mittels des Konfigurationsmoduls (10) der DNS-Server (14) und/oder das Routingmodul (20/30) derart konfiguriert wird, dass Domain Namen mittels des DNS-Servers (14) auf dem Subnetzwerk (200/300) definierbar und/oder abfragbar sind.

3. Verfahren nach Anspruch 2, **dadurch gekennzeichnet, dass** mittels des Konfigurationsmoduls (10) der DHCP-Server (13) und/oder der DNS-Server (14) derart konfiguriert werden, dass Domain Namen Einträge und/oder Host Namen Einträge und/oder Netzwerkadressen Einträge des DNS-Servers (14) mittels des DHCP-Servers (13) auf dem DNS-Server (14) verwaltbar sind.

4. Verfahren nach einem der Ansprüche 1 bis 3, **dadurch gekennzeichnet, dass** mittels des Konfigurationsmoduls (10) einer Subnetzwerkerfassungseinheit (11) mehrere Routingmodule (20/30) zugeordnet werden, wobei mittels eines Routingmoduls (20/30) jeweils mindestens ein Subnetzwerk (200/300) realisierbar ist.

5. Verfahren nach einem der Ansprüche 1 bis 4, **dadurch gekennzeichnet, dass** als Identifikationsmodul (12) ein zentral verwaltbarer RADIUS-Server verwendet wird.

6. Verfahren nach einem der Ansprüche 3 bis 5, **dadurch gekennzeichnet, dass** zur Verwaltung der Einträge des DNS-Servers durch den DHCP-Server ein erweitertes DNS-Protokoll verwendet wird.

7. Verfahren nach einem der Ansprüche 1 bis 6, **dadurch gekennzeichnet, dass** zur Identifikation des Datentunnels (201,202/301,302,303) mindestens ein Identifikator und ein Passwort verwendet werden.

8. Verfahren nach einem der Ansprüche 2 bis 7, **dadurch gekennzeichnet, dass** bei einer dynamischen Konfiguration einer Netzwerkadresse des Subnetzwerks (200/300) durch den DHCP-Server (13) mittels eines dynamischen DNS-Updates Einträge des DNS-Servers (14) aktualisiert werden.

9. Verfahren nach einem der Ansprüche 1 bis 8, **dadurch gekennzeichnet, dass** das Routingmodul (20/30) und/oder das Identifikationsmodul (12) und/oder der DHCP-Server (13) und/oder der DNS-Server (14) ein Firewallmodul zur Überwachung von Datenverbindungen umfassen, wobei das oder die Firewallmodule mittels des Konfigurationsmoduls (10) mindestens derart konfiguriert werden, dass mindestens bestimmbare Datenverbindungen zwischen Subnetzwerken gesperrt sind.

10. Verfahren nach einem der Ansprüche 1 bis 9, **dadurch gekennzeichnet, dass** als Datentunnel (201,202/301,302,303) eine Verbindung gemäss dem PPP Protokoll (Point-to-Point Protocol) verwendet wird.

11. Verfahren nach einem der Ansprüche 1 bis 10, **dadurch gekennzeichnet, dass** als gesicherte Datenverbindung (421,422/431,432,433) eine serielle Verbindung gemäss dem RS232 Standard oder dem USB (Universal Serial Bus) Standard verwendet wird.

12. System zur automatisierten Konfiguration eines Subnetzwerks (200/300) innerhalb eines Netzwerks (100), wobei das Netzwerk (100) mindestens ein Identifikationsmodul (12) und einen DHCP-Server (13) umfasst, wobei das Subnetzwerk (200/300) mindestens ein Routingmodul (20/30) und ein oder mehrere Netzwerkverbindungsgeräte (21,22/31,32,33) umfasst, und wobei das mindestens eine Routingmodul (20/30) über ein Interface mit dem Netzwerk (100) verbindbar ist, **dadurch gekennzeichnet,**
**dass** ein Konfigurationsmoduls (10) Mittel umfasst zur Konfiguration des mindestens einen Routingmoduls mit Konfigurationsdaten zur Anbindung eines Datentunnels (201,202/301,302,303) zwischen dem Routingmodul (20/30) und dem Netzwerkverbindungsgerät (21,22/31,32,33),
**dass** das Konfigurationsmodul (10) Mittel umfasst zur Konfiguration des Identifikationsmoduls (12) und/oder des Routingmoduls (20/30) derart, dass der Datentunnel (201,202/301,302,303) mittels mindestens eines Zugriffs des Routingmoduls (20/30) auf das Identifikationsmodul (12) identifizierbar ist,
**dass** das Konfigurationsmodul (10) Mittel umfasst zur Konfiguration des DHCP-Servers und/oder des Routingmoduls (20/30) derart, dass Netzwerkadressen des Subnetzwerks (200/300) mittels des DHCP-Servers (13) dynamisch konfigurierbar sind,
**dass** das Konfigurationsmodul (10) Mittel umfasst zur Konfiguration des Netzwerkverbindungsgeräts (21,22/31,32,33) über eine gesicherte Datenverbindung (421,422/431,432,433) mit Konfigurationsdaten zur Erstellung des Datentunnels (201,202/301,302,303) zwischen dem Netzwerkverbindungsgerät (21,22/31,32,33) und dem Routingmodul (20/30).

13. System nach Anspruch 12, **dadurch gekennzeichnet, dass** das Netzwerk (100) einen DNS-Server (14) umfasst und dass das Konfigurationsmodul (10) Mittel umfasst zur Konfiguration des DNS-Servers (14) und/oder des Routingmoduls (20/30) derart, dass Domain Namen mittels des DNS-Servers auf dem Subnetzwerk (200/300) definierbar und/oder abfragbar sind.

14. System nach einem der Ansprüche 12 bis 13, **dadurch gekennzeichnet, dass** das Konfigurationsmodul (10) Mittel umfasst zur Konfiguration des DHCP-Servers (13) und/oder des DNS-Servers (14) derart, dass Domain Namen Einträge und/oder Host Namen Einträge und/oder Netzwerkadressen Einträge des DNS-Servers (14) mittels des DHCP-Servers (13) auf dem DNS-Server (14) verwaltbar sind.

15. System nach einem der Ansprüche 12 bis 14, **dadurch gekennzeichnet, dass** das Konfigurationsmodul (10) Mittel umfasst zur Zuordnung von mehreren Routingmodulen (20/30) zu einer Subnetzwerkerfassungseinheit (11), wobei mittels eines Routingmoduls (20/30) jeweils mindestens ein Subnetzwerk (200/300) realisierbar ist.

16. System nach einem der Ansprüche 12 bis 15, **dadurch gekennzeichnet, dass** das Identifikationsmodul (60) einen zentral verwaltbaren RADIUS-Server umfasst.

17. System nach einem der Ansprüche 12 bis 16, **dadurch gekennzeichnet, dass** zur Verwaltung der DNS-Server (14) Einträge mittels des DHCP-Servers (13) ein erweitertes DNS-Protokoll verwendet wird.

18. System nach einem der Ansprüche 12 bis 17, **dadurch gekennzeichnet, dass** die Identifikation des Datentunnels mindestens einen Identifikator und ein Passwort umfasst.

19. System nach einem der Ansprüche 12 bis 18, **dadurch gekennzeichnet, dass** bei einer dynamischen Konfiguration einer Netzwerkadresse des Subnetzwerks (200/300) durch den DHCP-Server (13) mittels eines dynamischen DNS-Updates Einträge des DNS-Servers (14) aktualisiert werden.

20. System nach einem der Ansprüche 12 bis 19, **dadurch gekennzeichnet, dass** das Routingmodul (20/30) und/oder das Identifikationsmodul (12) und/oder der DHCP-Server (13) und/oder der DNS-Server (14) ein Firewallmodul zur Überwachung von Datenverbindungen umfassen, wobei das oder die Firewallmodule mittels des Konfigurationsmoduls (10) mindestens derart konfiguriert werden, dass mindestens bestimmbare Datenverbindungen zwischen Subnetzwerken gesperrt sind.

21. System nach einem der Ansprüche 12 bis 20, **dadurch gekennzeichnet, dass** als Datentunnel (201,202/301,302,303) eine Verbindung gemäss dem PPP Protokoll (Point-to-Point Protocol) verwendet wird.

22. System nach einem der Ansprüche 12 bis 21, **dadurch gekennzeichnet, dass** als gesicherte Datenverbindung (421,422/431,432,433) eine serielle Verbindung gemäss dem RS232 Standard oder dem USB (Universal Serial Bus) Standard verwendet wird.
